# EUROPÄISCHE PATENTANMELDUNG

(11) **EP 2 711 169 A1**
(43) Veröffentlichungstag der Anmeldung: **26.03.2014**
(21) Anmeldenummer: 13185558.7
(22) Anmeldetag: 23.09.2013
(51) Int. Cl.: B32B 1/08, B32B 15/08, B32B 15/20, B32B 27/08, B32B 27/30, B32B 27/32, F16L 11/12

(54) **Rohr, insbesondere medienführendes Rohr oder Ummantelungsrohr, sowie Verfahren zu seiner Herstellung**

(30) Priorität: 21.09.2012 DE 102012216984
(71) Anmelder: egeplast international GmbH, 48268 Greven (DE)
(72) Erfinder: Stranz, Michael, 48268 Greve (DE)
(74) Vertreter: von Kreisler Selting Werner

(57) **Zusammenfassung**

Das Rohr (10) weist mindestens ein Innenrohr (12;44) und mindestens einen Informationsträger (16,20;48) auf. Ferner weist das Rohr (10) ein das mindestens eine Innenrohr (12;44) umgebendes äußeres Hüllrohr (26;46) auf, in dem oder in dessen Wand der mindestens eine Informationsträger (16,20;48) angeordnet ist. Das äußere Hüllrohr (26;46) ist für elektromagnetische Strahlung im sichtbaren Wellenlängenbereich transparent und weist ein teilkristallines Polyolefin-Material auf.

## Beschreibung

Die vorliegende Anmeldung nimmt die Priorität der deutschen Patentanmeldung 10 2012 216 984.9 vom 21. September 2012 in Anspruch, deren Inhalt hiermit durch Bezugnahme zum Gegenstand der vorliegenden Patentanmeldung wird.

Die Erfindung betrifft ein Rohr, bei dem es sich insbesondere um ein medienführendes Rohr für beispielsweise Wasser oder Gas handelt. Bei dem Rohr kann es sich auch um ein Ummantelungsrohr handeln, in dem eine Vielzahl von Einzelrohren in Form eines Bündels zusammengehalten werden. Die Einzelrohre können dabei beispielsweise Glasfasern aufnehmen. Ferner betrifft die Erfindung ein Verfahren zur Herstellung des zuvor genannten Rohres.

Medienführende Rohre sind im Stand der Technik in unterschiedlichen Ausgestaltungen bekannt. Zumeist weisen diese Rohre ein Kunststoff-Basisrohr oder mindestens eine Kunststoffschicht auf, die einen Teil der Rohrwandung bildet.

Erhöhte Anforderungen an die Qualitätssicherung sowie die Rückverfolgbarkeit von Rohren machen eine Signierung der Rohre erforderlich. Dies erfolgt im einfachsten Fall durch das Aufkleben von Etiketten o.dgl. anderen Klebe-Informationsträgern, die die erforderliche Signierung in Form einer Bedruckung aufweisen. Alternativ kann die Signierung auch direkt auf das Rohr aufgedruckt werden. In beiden Fällen ist das Rohr also insoweit mit einem Informationsträger (im zuletzt genannten Fall in Form beispielsweise von eines Tinten-oder Laseraufdrucks) versehen.

Probleme bereitet dabei die Tatsache, dass auf Grund der mitunter rauen Bedingungen während der Lagerung und des Einbaus der Rohre nicht hinreichend garantiert werden kann, dass der Informationsträger auch nach längerer Zeit dauerhaft lesbar bleibt. Dies hängt nicht zuletzt auch mit möglicherweise mangelnder Haftung eines Etiketts o.dgl. Klebe-Informationsträger auf dem Rohr zusammen. Hier wirken sich insbesondere Kunststoffmaterialien nachteilig aus, die nicht oder nur in geringem Maße polar sind. Da solche Materialien aber vorteilhaft für die Standzeiten und die Resistenz der Rohre sind, kann auf sie nicht so ohne weiteres verzichtet bzw. können diese Materialien nicht so ohne weiteres durch andere ersetzt werden.

Aus den oben genannten Gründen ist es also erforderlich und zweckmäßig, an einem Rohr vorgesehene Signierungen durch beispielsweise die oben genannten Informationsträger zu schützen. Das aber setzt voraus, dass die Signierung weiterhin von außen lesbar und erkennbar ist, und zwar mit dem bloßen Auge.

Es ist bekannt, Kunststoffrohre mit transparenten Hüllrohren zu versehen. Dies ist beispielsweise in DE-A-100 12 239 beschrieben. Bei diesem bekannten Kunststoffrohr besteht das Hüllrohr aus einem glykolmodifizierten Polyethylenterephthalat (PET), das neben seiner Transparenz für elektromagnetische Strahlung im sichtbaren Wellenlängenbereich zusätzlich auch biegeelastische Eigenschaften bei gleichzeitig hoher Oberflächenhärte und damit hoher Abriebfestigkeit haben soll. Glykolmodifiziertes PET ist aber weiterhin vergleichsweise biegesteif, weshalb nichtsdestotrotz die Gefahr von unerwünschtem Verkratzen und Sprödizität besteht.

In JP-A-2000 018448 ist ein Hochdruckschlauch beschrieben, dessen äußerste Gummierungsschicht eine Identifikationsmarkierung trägt, die von einer transparenten PE-Folie überdeckt ist. Das PE weist ein sehr hohes Molekulargewicht auf, während die Folie lediglich 0,05 mm bzw. 1 mm dick ist. Bei derartigen Dicken ist ein zuverlässiger Schutz der Identifikationsmarkierung des Rohres leider nicht gegeben.

In WO-A-2010/106302 wird ein Herstellungsprozess zur lokalen Markierung von bereits gefertigten Rohren beschrieben, bei dem in einem Längsabschnitt des Rohres dessen äußere Schicht entfernt wird, um in der so entstandenen Umfangsvertiefung ein Markierungsträger anzuordnen, der dann von einem transparenten Silikon überdeckt wird, das die Umfangsvertiefung im Wesentlichen ausfüllt.

In EP-B-1 884 811 ist ein Rohr mit Sensor beschrieben, bei dem in die Rohrwandung ein Sensor bzw. Informationsträger eingebettet ist. Dieser Sensor ist von außen nicht zu erkennen.

Ein Rohrstück aus Kunststoff mit innenliegendem Sensor ist aus EP-A-1 772 657 bekannt. Ferner zeigt EP-A-2 395 458 ein Rohr mit außenliegendem Informationsträger.

In DE-A-10 2007 017 965 ist ein Kabel offenbart, das mit einer Informationsträgereinheit versehen ist.

Ein Schlauch mit Sicherheitskennzeichnung, die sich unter einer transparenten Schrumpfschlauchmanschette befindet, ist in DE-A-103 28 649 beschrieben.

Aufgabe der Erfindung ist es, ein mechanisch widerstandsfähiges, flexibles Rohr mit einer durch eine transparente Schicht zuverlässig geschützten Signatur zu schaffen.

Zur Lösung dieser Aufgabe wird mit der Erfindung ein Rohr vorgeschlagen, das versehen ist mit
- mindestens einem Innenrohr,
- mindestens einem Informationsträger, der auf dem mindestens einen Innenrohr oder mindestens einem der Innenrohre angeordnet ist, und
- einem das mindestens eine Innenrohr umgebenden äußeren Hüllrohr,
- wobei das äußere Hüllrohr für elektromagnetische Strahlung im sichtbaren Wellenlängenbereich transparent ist und ein teilkristallines Polyolefin-Material aufweist.

Bei dem erfindungsgemäßen Rohr umgibt das äußere Hüllrohr mindestens ein Innenrohr. Sofern das erfindungsgemäße Rohr genau ein Innenrohr aufweist, dient das äußere Hüllrohr als Schutzmantel zum Schutz vor einer Beschädigung des Innenrohres bei der Lagerung, Vorverarbeitung und Installation des Rohres. Ein derartiger Schutzmantel ist insbesondere bei verschweißbaren Innenrohren von Vorteil, da er das Innenrohr bzw. dessen Außenseite bis zur Verschweißung vor Verschmutzungen, Korrosion und Beschädigungen schützt. Vorteilhaft ist es, wenn nun dieser Schutzmantel aus für elektromagnetische Strahlung im sichtbaren Wellenlängenbereich transparentem Material besteht. Hier schlägt die Erfindung die Verwendung eines teilkristallinen Polyolefin-Materials vor, bei dem es sich insbesondere um Polypropylen handelt, welches, da es vielfach Verwendung findet, als Massenrohstoff preisgünstig ist. Wenn die Außenseite des Innenrohres Polyethylen als Kunststoffmaterial aufweist, hat die Verwendung des teilkristallinen transparenten Polypropylens den Vorteil, dass sich der Schutzmantel nicht mit dem Innenrohr verbindet, der Schutzmantel also an den zu verschweißenden Rohrenden in gewohnter Weise einfach abgetrennt werden kann. Durch den transparenten Schutzmantel hindurch kann der auf der Außenseite des mindestens einen Innenrohres bzw. mindestens eines der Innenrohre befindliche Informationsträger bzw. eine wie auch immer geartete Signierung von außen betrachtet werden, wobei der Informationsträger auf dem Innenrohr angeordnet oder in den Schutzmantel (d.h. in das Hüllrohr) eingebettet ist. In beiden Fällen ist der Informationsträger geschützt, ohne dass dadurch seine Erkennbarkeit von außen leidet.

Die Besonderheit der Erfindung besteht in der Wahl des transparenten teilkristallinen Polyolefin-Materials und insbesondere in der Wahl von Polypropylen als ein derartiges Polyolefin-Material und der Tatsache, dass mit dieser Werkstoffauswahl eine kontinuierliche (endlose) Herstellung des Innenrohres sowie des Hüllrohres mit gleichzeitiger in-situ Markierung durch den Informationsträger ermöglicht wird und so auch eine fortlaufende Metrierung des Rohres erfolgen kann. Grundsätzlich gilt, dass nahezu sämtliche amorphe Kunststoffe optisch transparent sind, wie es beispielsweise bei PET der Fall ist. Nachteilig dabei ist, dass die amorphen Kunststoffe bei den Gebrauchstemperaturen aber spröde und vergleichsweise biegesteif sind, was es schwierig macht, Rohre, die beispielsweise eine äußere Schicht aus einem derartigen amorphen Kunststoff aufweisen, auf Rohre bzw. als Ringbunde zu wickeln. Um die mechanischen Eigenschaften amorpher Kunststoffe zu verbessern, müssen diese modifiziert werden, wobei nicht erwiesen ist, inwieweit man dadurch die nachteiligen Eigenschaften dieser Materialien bezüglich Sprödizität und Steifigkeit verbessert.

Üblicherweise sind Thermoplaste milchig oder opak, was insbesondere auch für teilkristallines Polypropylen gilt. Durch eine spezielle Additivierung, d.h. Zugabe von Stoffen, wird erreicht, dass die beim Abkühlen der Schmelze entstehenden Kristalle sehr klein bleiben und damit das Licht nicht brechen können, so dass eine hohe Transparenz beim erstarrten Produkt resultiert. Damit erreicht man sehr gute mechanische (wegen der teilkristallinen Struktur) und chemische Eigenschaften (da es sich um Polyolefin-Material handelt) bei hoher Transparenz, was insbesondere von Vorteil für den Rohranwendungsfall ist. Zusätzlich ist noch die allgemeine chemische und UV-Beständigkeit der Poly-olefine, und zwar insbesondere von Polypropylen, zu nennen, was den Vorzug des teilkristallinen Polypropylens für den erfindungsgemäßen Anwendungsfall weiter unterstreicht. Die Zugabe von Stoffen zur Beeinflussung der Kristallisationskinetik von Polyolefinen kann überall dort mit dem Vorteil der Bildung von sehr kleinen Kristallen und insbesondere dann zum gewünschten Effekt der Transparenz des erstarrten Materials führen, wenn die Erstarrung des Polyolefins vergleichsweise langsam erfolgt.

Als weiterer Anwendungsfall für den Einsatz des erfindungsgemäßen Rohres sei auf sogenannte Mehrfachrohre verwiesen, bei denen das Hüllrohr mehrere Innenrohre, also ein Innenrohrbündel umschließt bzw. umgibt. Das erfindungsgemäß transparente Hüllrohr erlaubt damit einen Blick auf das Rohrbündel, und zwar von außen durch das Hüllrohr hindurch. Jedes Innenrohr kann signiert sein, weist also einen Informationsträger auf, was von außen mit dem bloßen Auge erkennbar ist. Alternativ bzw. zusätzlich kann ein weiterer Informationsträger vorhanden sein, der Informationen zu dem gesamten Rohrbündel und/oder dem dieses umfassenden Hüllrohr trägt. Dieser Informationsträger ist z. B. in die Wandung des Hüllrohres integriert oder befindet sich außen an dem Rohrbündel und damit zwischen diesem und dem Hüllrohr.

Insbesondere aber ist, wie oben bereits ausgeführt, die Anwendung der Erfindung bei einem Rohr mit transparentem, im Bedarfsfalle abnehmbarem Schutzmantel als äußeres Hüllrohr zu sehen. Hierbei umschließt das äußere Hüllrohr das Innenrohr, ohne mit dem Innenrohr stoffschlüssig verbunden zu sein. Dies gelingt beispielsweise durch Vorsehen einer Trennfolie bzw. Trennschicht zwischen Hüllrohr und Innenrohr oder aber durch Verwendung unterschiedlicher Kunststoffmaterialien wie beispielsweise Polyethylen für das Innenrohr bzw. die Außenseite des Innenrohres und teilkristallines Polypropylen für das Hüllrohr. Die mechanische Fixierung des Hüllrohres auf dem Innenrohr kann auch infolge eines Schrumpfens des Hüllrohres auf das Innenrohr beim Abkühlen und nach der Herstellung des Rohres erfolgen. Die mechanische Fixierung ohne stoffschlüssige Verbindung kann auf vielerlei Arten und Weisen realisiert werden, was im Stand der Technik grundsätzlich bekannt ist und daher an dieser Stelle nicht weiter ausgeführt werden soll.

In weiterer vorteilhafter Ausgestaltung der Erfindung kann vorgesehen sein, dass der mindestens eine Informationsträger ein insbesondere mit einem automatisch auslesbaren Code wie z.B. Barcode bedrucktes Etikett, insbesondere Klebeetikett, ein berührungslos auslesbares elektronisches Bauteil wie z.B. ein RFID-Tag oder einen Farbstreifen aufweist oder als direkte Bedruckung durch Tinte oder Laser auf dem Innenrohr ausgebildet ist. Der Begriff "Informationsträger" soll im Rahmen der Erfindung also weit ausgelegt werden und jedwede Art von Rohrsignierung umfassen.

Alternative Ausgestaltungen des mindestens einen oder jedes Innenrohres sind möglich. Das vorhandene, mindestens eine Rohr kann ein Einschicht- oder Mehrschichtrohr aus Kunststoff sein, das diverse funktionale Kunststoffschichten aufweist. Es ist auch möglich, dass als Innenrohr ein Mehrschichtverbundrohr aus unterschiedlichen Materialien verwendet wird. In beiden Fällen kann das Innenrohr eine Diffusionssperrschicht aufweisen, die beispielsweise in Form einer EVOH-Schicht oder einer Aluminiumschicht, welche als spiralförmig um das Innenrohr herumgewickeltes Aluminiumband oder als anderweitig um das Innenrohr gelegtes Aluminiumband ausgebildet ist, vorliegt. Das erfindungsgemäß transparente Hüllrohr lässt eine optische Inspektion der Außenseite des Innenrohres zu, was im Falle einer Diffusionssperrschicht an der Außenseite des Innenrohres den Vorteil hat, dass Beschädigungen derselben von außen erkannt werden können.

Die oben genannte Aufgabe wird ferner mit Hilfe eines Verfahrens zur Herstellung eines Rohres, insbesondere eines Kunststoffrohres mit einem Informationsträger gelöst, wobei das Verfahren die folgenden Schritte umfasst:
- kontinuierliches Zuführen oder Bereitstellen mindestens eines Innenrohres,
- kontinuierliches Applizieren mindestens eines Informationsträgers auf dem mindestens einen Innenrohr oder auf mindestens einem der Innenrohre und
- kontinuierliches Umgeben des mindestens einen Innenrohres mit einem Hüllrohr aus einem für elektromagnetische Strahlung im sichtbaren Wellenlängenbereich transparenten, teilkristallinen Polyolefin-Material.

Hierdurch ergibt sich eine irreversible Verbindung des Informationsträgers zum Produkt (nicht lösbar vom Rohr ohne Zerstören des Mantels) und dadurch fälschungssichere Markierung des Rohres (Herstelldatum, Werkstoffe etc.) zum Nachweis einer geschlossenen Produktionskette möglich.

Hierbei kann in vorteilhafter Weiterbildung vorgesehen sein, dass der Schritt des Umgebens des mindestens einen Innenrohres mit dem Hüllrohr das Aufextrudieren des Polyolefin-Materials auf das mindestens eine Innenrohr umfasst.

Desweiteren ist es zweckmäßig, wenn der Schritt des Bereitstellens des mindestens einen Innenrohres das Extrudieren des mindestens einen Innenrohres aus einem extrudierbaren Material, insbesondere aus einem thermoplastischen Kunststoffmaterial umfasst.

Bei einer weiteren vorteilhaften Ausgestaltung des erfindungsgemäßen Verfahrens kann vorgesehen sein, dass das mindestens eine extrudierte Innenrohr abkühlt oder abgekühlt wird und dass stromab eines Extruders der mindestens eine oder ein Informationsträger auf das Innenrohr aufgebracht wird.

Schließlich kann es zweckmäßig sein, wenn das Polyolefin-Material für das Hüllrohr (26;46) nach dem Applizieren des mindestens einen oder eines Informationsträgers auf das abgekühlte Innenrohr aufextrudiert wird. Dies hat den Vorteil, dass die Wärme des geschmolzenen, aufextrudierten Polyolefin-Materials des Hüllrohres schnell zum Innenrohr hin abgeführt wird, da dieses Innenrohr beim Aufextrudieren vergleichsweise kühl ist. Hierdurch wird der Informationsträger schonend behandelt, wobei der Wärmeeintrag in das System insbesondere auch durch Wahl einer möglichst dünnen Wand für das Hüllrohr zu geringen Werten hin steuerbar ist.

Die Erfindung wird nachfolgend anhand zweier Ausführungsbeispiele sowie unter Bezugnahme auf die Zeichnung näher erläutert. Im Einzelnen zeigen dabei:
- Fig. 1: ein erstes Ausführungsbeispiel der Erfindung, bei dem ein medienführendes Innenrohr von einem abnehmbaren, transparenten Schutzmantel in Form eines Hüllrohres umschlossen ist,
- Fig. 2: ein Beispiel für die Fertigung eines Rohres nach Fig. 1 und
- Fig. 3: ein weiteres Ausführungsbeispiel der Erfindung in Form eines Mehr-fachrohres.

In der Vergangenheit wurden diverse Vorschläge unterbreitet, (Kunststoff-) Rohre mit einem mechanisch fixierten Hüllrohr als Schutzmantel zu versehen, der, um beim Rohrleitungsbau Rohre mittels Schweißen verbinden zu können, zumindest an den Rohrenden entfernt werden kann. Eine Konstruktion eines derartigen Mehrschichtrohres ist beispielsweise in DE-C-41 24 825 sowie DE-A-23 45 646 beschrieben.

Kunststoff-Mehrschichtrohre der zuvor genannten Art für den Transport von Trinkwasser, Gas und Abwasser gehören zur Gruppe der sogenannten Schutzmantelrohre, die additive Schutzschichten aufweisen. Dabei besteht der eigentliche Zweck des Schutzmantels bzw. des Hüllrohres darin, das darunterliegende Innenrohr bei der Freilagerung vor Oxidation der Außenfläche des Innenrohres durch Witterungseinflüsse sowie UV-Strahlung zu schützen und beim Transport sowie beim Rohrleitungsbau selbst mögliche Beschädigungen zu vermeiden. Dadurch soll zum einen jegliche Schwächung der mechanischen Eigenschaften des Innenrohres vermieden werden und zum anderen eine schmutz-, kratzer- und riefenfreie Oberfläche für das normgerechte Verschweißen beim Verbinden der Rohre gewährleistet werden.

Insbesondere Schutzmantelrohre, die der Versorgung, Entsorgung und dem Transport von Gas, Trink- und Prozess- sowie Abwässern eingesetzt werden, sind derart ausgeführt, dass das Innenrohr von einem farbigen Schutzmantel (dem Hüllrohr) konzentrisch umhüllt ist, so dass das medienführende Innenrohr solange nicht von außen zu erkennen ist, bis der Schutzmantel ganz oder teilweise entfernt ist. Daher war es bisher notwendig, sowohl das Innenrohr als auch den Schutzmantel mit einer Kennzeichnung zu versehen, damit beispielsweise der Anwendungszweck, die geometrischen Abmessungen, die Betriebsbedingungen und die jeweiligen Zulassungen des Rohres eindeutig erkennbar waren.

Allerdings werden von den Anwendern von Rohren auch zunehmend Informationsträger wie beispielsweise RFID-Chips oder maschinell lesbare Barcodes (entweder auf Etiketten oder direkt auf das Innenrohr gedruckt) als Kennzeichnung der Rohre zur lückenlose Rückverfolgbarkeit verlangt.

Das Aufbringen eines Barcodes, der permanent am Innenrohr bzw. Schutzmantel haftet und gegen Abrasion sowie Kratzer resistent ist, was für eine dauerhafte und lückenlose Identifikation der Rohre auch über Jahre im Betrieb notwendig wäre, ist bisher nur unzureichend gelöst. Insbesondere bei der Kunststoffklasse der Polyolefine, wie beispielsweise Polyethylen oder Polypropylen, welche auf Grund ihrer geringen Polarität sich nicht dauerhaft und abrasionsfest mit bekannten Beschriftungsverfahren wie Tintenstrahldruckern mit einem Strichcode beschriften lassen, und dass seit Jahren eingesetzte Heißprägeverfahren an sich als Lösung für einen Barcode ausscheidet, werden bevorzugt bedruckte Klebeetiketten verwendet. Diese aber haben den Nachteil, dass die Klebefestigkeit (und insbesondere deren Dauerhaftigkeit) bei Polyolefinen unzureichend ist, was teilweise zum Ablösen der Etiketten bei längerer Freilagerung führt. Ein weiterer Nachteil von Etiketten ist ihre mangelnde Beschädigungsresistenz; so werden die Etiketten beispielsweise beim Transport und Verbau der Rohre oftmals verkratzt, verschmutzt oder sogar gänzlich von der Rohroberfläche abgerissen, so dass ein Auslesen des Informationsträgers nicht mehr möglich ist.

Die aktuellen Gegebenheiten und Anforderungen im Markt lassen sich wie folgt zusammenfassen:
- Rohre aus Polyolefinen, vorzugsweise Polyethylen, müssen bei modernen Verlegeverfahren mit einer vor vielerlei Beschädigungen ihrer äußeren Oberfläche schützenden und notwendigerweise entfernbaren Außenhülle überzogen werden.
- Diese Außenhülle, auch Schutzmantel genannt, ist aus einem Kunststoff, der eingefärbt oder im Falle von naturbelassenen Rohrstoffen opak ist, so dass das normkonforme Innenrohr inkl. Kennzeichnung erst nach Entfernen des Schutzmantels sichtbar wird.
- Die "blickdichte Überdeckung" des normgerechten Innenrohres mit dem Schutzmantel macht grundsätzlich eine zweifache Kennzeichnung der Rohroberflächen notwendig. Zum einen das Innenrohr, so dass Einsatz und Verwendung eindeutig beschrieben sind, falls der Schutzmantel entfernt wurde, zum anderen den äußeren Schutzmantel.
- Werden neben der üblichen alphanumerischen Kennzeichnung weiterführende Kennzeichnungen, die automatisiert auslesbar sein sollen und eine lückenlose Rückverfolgbarkeit (Traceability) leisten können, verlangt, kommen Klebeetiketten mit einem Barcode als Informationsträger zum Einsatz. Diese haften schlecht an polaren Polyolefinen, sind manuell ablösbar, verkratzen und verwittern leicht bei Freilagerung, Transport und Verbau der Rohre.
- Bei Mehrschichtrohren, die zwischen Schutzmantel und Innenrohr noch weitere Funktionsschichten aufweisen, wie beispielsweise eine diffusionsdichte Schicht aus einem Aluminiumstreifen, der während der Fertigung um das Innenrohr gewickelt oder anderweitig um das Innenrohr gelegt wird, können Fertigungsfehler bzw. durch Transport oder Verlegung in der Aluminium-Schicht verursachte Fehlstellen nicht oder nur mit hohem Aufwand detektiert werden.

Mit dem erfindungsgemäß vorgeschlagenen Ansatz soll hier Abhilfe geschaffen werden.

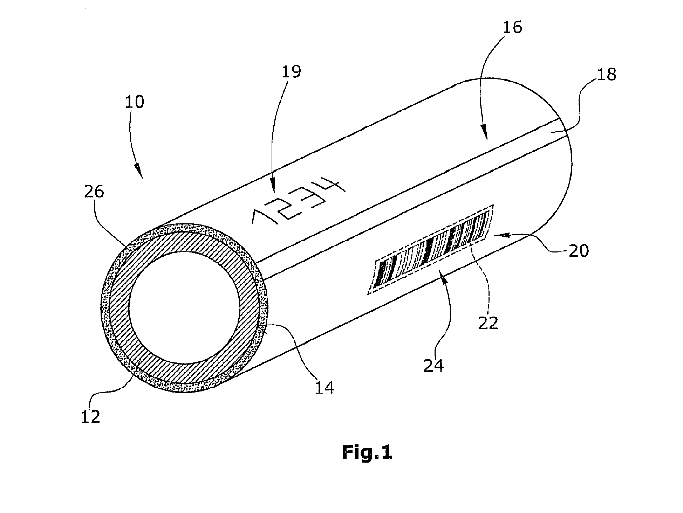

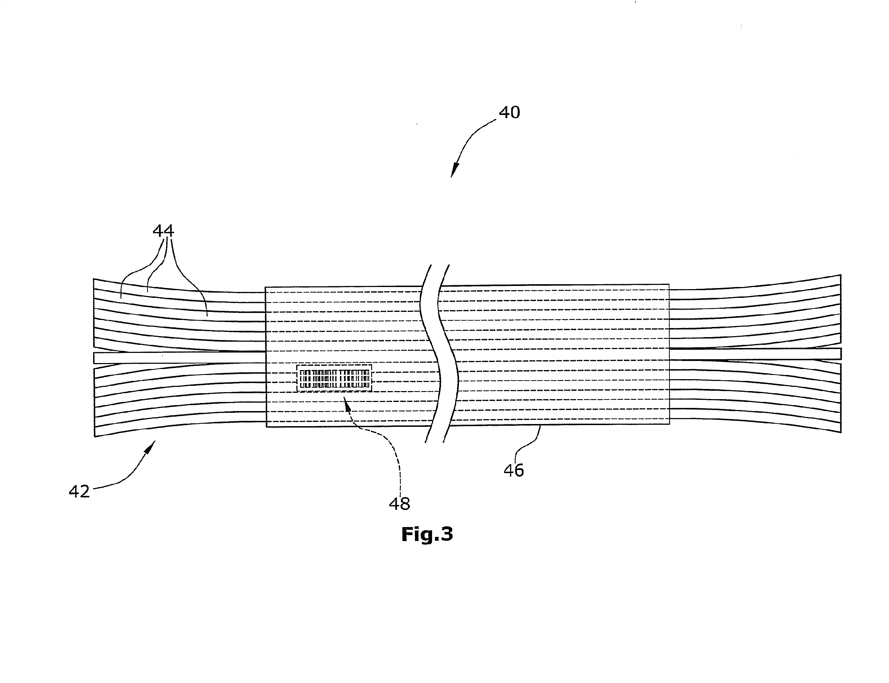

In den Fign. 1 und 3 sind zwei Ausführungsbeispiele eines Rohres mit transparentem Hüllrohr gezeigt. Bei dem Ausführungsbeispiel gemäß Fig. 1 dient das Rohr 10 beispielsweise dem Transport von Wasser (Frisch- oder Abwasser) oder Gas. Das Rohr 10 gemäß Fig. 1 weist ein Innenrohr 12 aus thermoplastischem Kunststoff auf, bei dem es sich in diesem Ausführungsbeispiel um ein Polyethylen handelt.

Die Außenseite 14 des Innenrohres 12 ist mit einer Signierung 16 versehen, die beispielsweise einen Farbstreifen 18 und/oder einen Schriftzug odgl. alphanummerische Zeichen 19 und einen weiteren Informationsträger 20 umfasst. Bei dem weiteren Informationsträger 20 handelt es sich in diesem Ausführungsbeispiel um ein Klebeetikett 22, auf dem ein Barcode 24 aufgedruckt ist.

Erfindungsgemäß ist das Kunststoff-Innenrohr 12 von einem (für elektromagnetische Strahlung im sichtbaren Wellenlängenbereich) transparenten Kunststoff-Hüllrohr 26 umgeben, das eine Schutzfunktion aufweist (Schutzmantel). Bei dem Kunststoffmaterial des Hüllrohres 26 handelt es sich um ein teilkristallines Polyolefin; in diesem Beispiel wurde als teilkristallines Polyolefin ein Polypropylen verwendet. Durch Zugabe von Additiven zu dem Polypropylen werden beim Abkühlen des Polypropylens aus der Schmelze kleinste Kristalle gebildet, deren Größe kleiner ist als die kleinste Wellenlänge, für die das teilkristalline Polypropylen (noch) transparent ist. Dadurch können die Kristalle das Licht nicht mehr brechen, so dass das teilkristalline Polypropylen (nahezu glas-)klar erscheint.

Der Vorteil der Verwendung des speziellen teilkristallinen Polypropylens besteht nun darin, dass die Signierung und insbesondere der Informationsträger 20 der Signierung von außen erkennbar ist. Die Signierung 16 ist damit vor Beschädigungen und Ablösungen geschützt. Das Hüllrohr 26 kann, wie der Schutzmantel um verschweißbare Innenrohre von Schutzmantelrohren an den Rohrenden abgetrennt werden, um zwei Rohrenden durch Verschweißung zu verbinden. Das Hüllrohr 26 weist also insoweit Schutzfunktion auf, als es die Außenseite 14 des Innenrohres 12 vor Korrosion und allgemein Beschädigungen schützt, was für die Verschweißbarkeit aneinanderzufügender Innenrohre 12 ganz entscheidend und vorteilhaft ist.

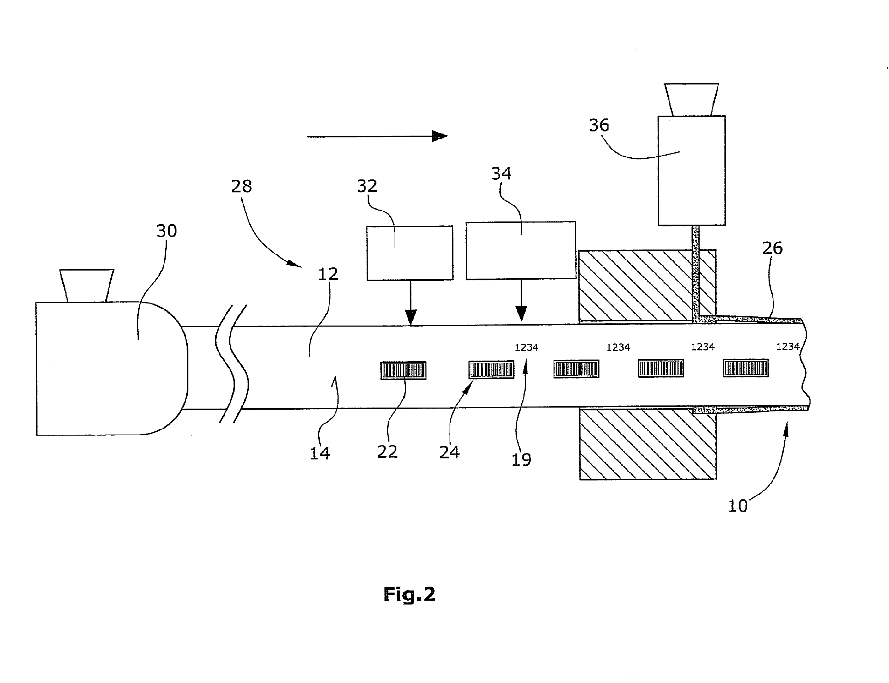

In Fig. 2 ist beispielhaft und schematisch eine Produktionslinie 28 zur Herstellung des Rohres 10 gemäß Fig. 1 gezeigt. Das Innenrohr 12 aus thermoplastischem Material (beispielsweise Polyethylen) wird mittels eines Extruders 30 extrudiert. Nach Durchlaufen einer Kühlstrecke (beispielsweise durch ein Kühlbad, eine Kühlmittelsprühanlage oder auch einfach an der Luft) gelangt das extrudierte, inzwischen auf eine niedrigere Temperatur abgekühlte Rohr 12 an einem Etiketten-Applikator 32, durch den die Barcode-bedruckten Etiketten 22 auf der Außenseite 14 des Rohres 12 appliziert werden.

Stromab des Etiketten-Applikators 32 befindet sich eine Vorrichtung 34 zum in diesem Ausführungsbeispiel Bedrucken des Innenrohres 12 als weitere bzw. zusätzliche Möglichkeit der Signierung des Innenrohres 12. Anschließend gelangt das Rohr 12 durch einen Querkopf-Extruder 36, in dem das transparente Hüllrohr 26 auf das Innenrohr 12 aufextrudiert wird. Anschließend erfolgt die Kühlung des so hergestellten Mehrschichtrohres 10.

In Fig. 3 ist ein weiteres Ausführungsbeispiel eines erfindungsgemäßen Rohres 40 gezeigt, das als Hüllrohr für ein Bündel 42 von Innenrohren 44 dient, die farblich oder auf andere Art und Weise optisch unterschiedlich sein können. Das Rohr 40 weist wiederum ein Hüllrohr 46 aus transparentem, teilkristallinem Polyolefin-Material, insbesondere aus teilkristallinem Polypropylen auf, so dass die Möglichkeit gegeben ist, die von dem Hüllrohr 46 umschlossenen Innenrohre 44 von außen zu erkennen. Anhand der farblichen Markierung der Innenrohre 44 können diese dann von außen unterschieden werden. An der Außenseite des Rohrbündels 42 und von dem Hüllrohr 46 überdeckt befindet sich ein Informationsträger in z. B. Form eines barcodebedruckten Etiketts 48.

Der eigentliche Kern der Erfindung ist also in Folgendem zu sehen:
- Die Konstruktion zur Lösung der angesprochenen Probleme sieht gemäß einer Variante der Erfindung einen mindestens zweischichtigen Rohraufbau vor, wobei die äußerste Schicht (Schutzmantel) mindestens transparent für optisch auslesende Barcodelesegeräte, vorzugsweise jedoch völlig transparent im sichtbaren Wellenlängenbereich ist und vom normkonformen Innenrohr trennbar bzw. ablösbar gestaltet wird. Des Weiteren ist die Konstruktion dadurch gekennzeichnet, dass Informationsträger wie z.B. Barcodeetiketten, RFID-Chips, kontinuierlich und in situ während des Fertigungsprozesses der Rohre zwischen den beiden Rohrschichten appliziert worden sind, so dass die Informationen nachträglich auch nicht mehr geändert werden können (fälschungssicher).
- Der Schutzmantel soll vorzugsweise aus einer thermoplastischen und extrudierbaren Formmasse bestehen, andere Werkstoffe insbesondere Kunststoffe, die mittels Lackier-, Tauch- oder Sprühtechniken auftragbar sind, können ebenfalls eingesetzt werden.
- Die für den Schutzmantel eingesetzte Polyolefin- (z.B. PP-)Formmasse soll hinsichtlich ihrer mechanischen Eigenschaften und Abrasionsresistenz die Verlegung der Rohre durch z.B. notwendig werdende größere Biegeradien erschweren. Zudem muss die eingesetzte Formmasse von sich aus optisch transparent sein, oder durch den Einsatz von Additiven teilkristallin und damit transparent modifiziert sein, oder durch besondere Verarbeitungsparameter bei der Extrusion wie beispielsweise gezieltes Kühlen direkt nach der Mantelaufbringung optisch transparent einstellbar sein.
- Werden bei der Herstellung des mindestens zweischichtigen Rohres weitere Schichten wie beispielsweise eine haftvermittelnde Schicht zwischen Innenrohr und Schutzmantel notwendig, so kann auch diese aus optisch transparenten Formmassen gestaltet werden. Zudem werden Additive eingesetzt, die der Formmasse des Schutzmantels zur Erhöhung der UV-Stabilität zugesetzt werden und deren Transparenz nicht beeinträchtigen.

Gegenüber dem Stand der Technik ergeben sich damit folgende Vorteile:
- Informationsträger wie ein Barcode können kostengünstig mittels Etiketten eingesetzt werden und sind durch den transparenten Schutzmantel gleichermaßen wie das Innenrohr gegen Beschädigungen geschützt. Sogar das Abwaschen von Schmutz an der Manteloberfläche wird möglich, ohne dass das Etikett beeinträchtigt wird.
- Die doppelte alphanumerische Kennzeichnung der Schutzmantelrohre kann entfallen. Eine Kennzeichnung nur des Innenrohres ist ausreichend.
- Die nach dem Stand der Technik eingesetzte Heißprägetechnik zum Auftrag der alphanumerischen Kennzeichnung könnte sogar insgesamt ersetzt werden durch ein zuvor beschriftetes Endlos-Etikett. Das würde es ermöglichen, Rohre mit geringeren Ovalitäten zu fertigen, da das Heißprägen auf Grund der dazu notwendigen Andruckrollen oft zu einer Verformung (Ovalisierung) der (noch) weichen Kunststoffrohre führt.
- Einmal aufgebracht und durch den transparenten Schutzmantel überdeckt, wird der Etiketten-Barcode nicht mehr per Hand zugänglich, kann somit nicht entfernt, ausgetauscht oder verändert werden, ist also manipulationssicher, so dass eine lückenlose und eindeutige Rückverfolgbarkeit gegeben ist.
- Auch Hinweis-Aufkleber oder elektronische Informationsträger wie RFID-Chips können sichtbar und gut geschützt zwischen Schutzmantel und Innenrohr platziert werden.
- Eine weitere, vorteilhafte Anwendung der Erfindung ist ein transparenter Schutzmantel bei mehrfach gebündelten Rohrsystemen, wie sie Stand der Technik im Bereich der Telekommunikationsbranche sind, darstellen. Hier werden mehrere kleinere Schutzrohre mittels Ummantelung mit einer Schutzhülle zu einem Mehrfachrohr gebündelt, was es notwendig macht, alle für den Anwender notwendigen Informationen der gesamten Konfektionierung auf den Mantel zu kennzeichnen. Auch hier wäre der Ansatz einen transparenten Mantel in Kombination mit einem Barcode-Etikett unter dem Mantel ein Problemlöser.

### BEZUGSZEICHENLISTE

- 10: Rohr (Schutzmantelrohr)
- 12: Kunststoff-Innenrohr
- 14: Außenseite des Kunststoff-Innenrohres
- 16: Signierung auf dem Kunststoff-Innenrohr
- 18: Farbstreifen des Kunststoff-Innenrohres
- 19: alphanummerische Kennzeichnung auf dem Kunststoff-Innenrohr
- 20: Informationsträger
- 22: Klebeetikett
- 24: Barcode auf dem Klebeetikett
- 26: Kunststoff-Hüllrohr
- 28: Produktionslinie
- 30: Extruder
- 32: Etiketten-Applikator
- 34: Vorrichtung zur Aufbringung der alphanummerischen Kennzeichnung
- 36: Querkopf-Extruder
- 40: Rohr (Mehrfachrohr)
- 42: Rohrbündel
- 44: Innenrohre (des Rohrbündels)
- 46: Hüllrohr
- 48: Informationsträger (Etikett des Mehrfachrohres)

## Patentansprüche

1. Rohr mit
- mindestens einem Innenrohr (12;44),
- mindestens einem Informationsträger (16,20;48), der auf dem mindestens einen Innenrohr (12;44) oder mindestens einem der Innenrohre (12;44) angeordnet ist, und
- einem das mindestens eine Innenrohr (12;44) umgebenden äußeren Hüllrohr (26;46),
- wobei das äußere Hüllrohr (26;46) für elektromagnetische Strahlung im sichtbaren Wellenlängenbereich transparent ist und ein teilkristallines Polyolefin-Material aufweist.

2. Rohr nach Anspruch 1, **dadurch gekennzeichnet, dass** das teilkristalline Polyolefin-Material Polypropylen ist.

3. Rohr nach Anspruch 1 oder 2, **gekennzeichnet durch** mehrere Innenrohre (44), die in Form eines Rohrbündels (42) innerhalb des Hüllrohrs angeordnet sind, wobei der mindestens eine Informationsträger (48) zwischen der Innenseite des Hüllrohres (46) und dem Rohrbündel (42) oder in der Wand des Hüllrohres (46) angeordnet ist.

4. Rohr nach Anspruch 1 oder 2, **dadurch gekennzeichnet, dass** ein einziges Innenrohr (12) vorhanden ist und dass das Hüllrohr (26) das Innenrohr (12) anliegend umschließt, ohne mit dem Innenrohr (12) stoffschlüssig verbunden zu sein.

5. Rohr nach einem der Ansprüche 1 bis 4, **dadurch gekennzeichnet, dass** der mindestens eine Informationsträger (16,20;48) ein insbesondere mit einem automatisch auslesbaren Code wie z.B. Barcode bedrucktes Etikett (20), insbesondere Klebeetikett, ein berührungslos auslesbares elektronisches Bauteil wie z.B. ein RFID-Tag oder einen Farbstreifen (18) aufweist oder als direkte Bedruckung durch Tinte oder Laser auf dem Innenrohr ausgebildet ist.

6. Rohr nach einem der Ansprüche 1 bis 5, **dadurch gekennzeichnet, dass** das mindestens eine Innenrohr (12;44) und/oder mindestens eines der mehreren Innenrohre (12;44) als Ein- oder Mehrschicht-Kunststoffrohr ausgebildet ist.

7. Rohr nach Anspruch 6, **dadurch gekennzeichnet, dass** bei Ausbildung als Mehrschicht-Kunststoffrohr eine Diffusionssperrschicht auf EVOH-Basis vorgesehen ist.

8. Rohr nach einem der Ansprüche 1 bis 5, **dadurch gekennzeichnet, dass** das mindestens eine Innenrohr (12;44) oder mindestens eines der mehreren Innenrohre (12;44) als Mehrschichtverbundrohr mit einem Kunststoff-Basisrohr ausgebildet ist.

9. Rohr nach Anspruch 8, **dadurch gekennzeichnet, dass** das Mehrschichtverbundrohr eine Diffusionssperrschicht in Form einer Aluminiumschicht oder einer EVOH-Schicht aufweist.

10. Rohr nach einem der Ansprüche 1 bis 9, **dadurch gekennzeichnet, dass** das Innenrohr (12;44) mindestens eine Schicht aus einem Polyolefin-Material, insbesondere aus Polyethylen oder Polypropylen aufweist.

11. Verfahren zur Herstellung eines Rohres, insbesondere Kunststoffrohres, mit einem Informationsträger, mit den folgenden Schritten:
- kontinuierliches Zuführen oder Bereitstellen mindestens eines Innenrohres (12;44),
- kontinuierliches Applizieren mindestens eines Informationsträgers (16,20;48) auf dem mindestens einen Innenrohr oder auf mindestens einem der Innenrohre und
- kontinuierliches Umgeben des mindestens einen Innenrohres (12;44) mit einem Hüllrohr (26;46) aus einem für elektromagnetische Strahlung im sichtbaren Wellenlängenbereich transparenten, teilkristallinen Polyolefin-Material.

12. Verfahren nach Anspruch 11, **dadurch gekennzeichnet, dass** der Schritt des Umgebens des mindestens einen Innenrohres (12;44) mit dem Hüllrohr (26;46) das Aufextrudieren des Polyolefin-Materials auf das mindestens eine Innenrohr (12;44) umfasst.

13. Verfahren nach Anspruch 11 oder 12, **dadurch gekennzeichnet, dass** der Schritt des Bereitstellens des mindestens einen Innenrohres (12;44) das Extrudieren des mindestens einen Innenrohres (12;44) aus einem extrudierbaren Material, insbesondere aus einem thermoplastischen Kunststoffmaterial umfasst.

14. Verfahren nach Anspruch 13, **dadurch gekennzeichnet, dass** das mindestens eine extrudierte Innenrohr (12;44) abkühlt oder abgekühlt wird und dass stromab eines Extruders der mindestens eine oder ein Informationsträger (16,20;48) auf das Innenrohr (12;44) aufgebracht wird.

15. Verfahren nach einem der Ansprüche 12 bis 14, **dadurch gekennzeichnet, dass** das Polyolefin-Material für das Hüllrohr (26;46) nach dem Applizieren des mindestens einen oder eines Informationsträgers (16,20;48) auf das abgekühlte Innenrohr (12;44) aufextrudiert wird.
